# EUROPÄISCHE PATENTSCHRIFT

(11) **EP 1 924 356 B1**
(45) Veröffentlichungstag und Bekanntmachung des Hinweises auf die Patenterteilung: **20.01.2010**
(21) Anmeldenummer: 06792917.4
(22) Anmeldetag: 21.08.2006
(51) Int. Cl.: B01J 31/02, B01J 31/22

(54) **VERFAHREN ZUR HERSTELLUNG VON POLYISOCYANURAT HARTSCHAUM**
METHOD FOR THE PRODUCTION OF POLYISOCYANURATE RIGID FOAM
PROCEDE DE PRODUCTION DE MOUSSE DE POLYISOCYANURATE RIGIDE

(30) Priorität: 01.09.2005 DE 102005041763
(43) Veröffentlichungstag der Anmeldung: 28.05.2008
(73) Patentinhaber: BASF SE, 67056 Ludwigshafen (DE)
(72) Erfinder: LEHMANN, Pit, 2000 Antwerpen (BE); MALOTKI, Peter, 01936 Schwepnitz (DE); TOMASI, Gianpaolo, 49356 Diepholz (DE); PEDEN, Gillian, Alfreton (GB); HENSIEK, Rainer, 49328 Melle (DE)
(86) Internationale Anmeldenummer: PCT/EP2006/065487
(87) Internationale Veröffentlichungsnummer: WO 2007/025888

(56) Entgegenhaltungen:
- EP-A- 0 002 281
- EP-A1- 0 656 382
- EP-A2- 0 361 937
- WO-A-98/20059
- JP-A- 2000 281 742
- US-A- 4 425 446
- DENSISOW ET AL: "Katalyse der Cyclotrimerisation von Isocyanaten durch Metallcarboxylation unter besonderer Berücksichtigung der Herstellung von PIC-Hartschaumstoffen" SYSPUR REPORTER, Bd. 19, 1981, Seiten 157-161, XP009077355

## Beschreibung

Die Erfindung betrifft ein Verfahren zur Herstellung von ameisensäure-getriebenen Polyisocyanurat-Hartschaumstoffen durch Umsetzung von
a) Isocyanaten mit
b) Verbindungen mit gegenüber Isocyanaten reaktiven Gruppen,
c) Treibmittel, enthaltend Ameisensäure,
d) einem Katalysatorsystem und
e) eventuell Schaumstabilisatoren, Flammschutzmittel und sonstigen Zusatzstoffen,
wobei das Katalysatorsystem
i) mindestens eine Verbindung der Struktur: 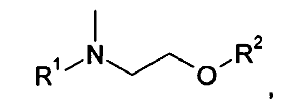 wobei R¹ für CH₃, CH₂-CH₂-N(CH₃)₂ oder CH₂-CH₂OH, und
   R² für H, CH₂-CH₂OH oder CH₂-CH₂N(CH₃)₂
steht, und
mindestens einen Trimerisierungskatalysator (ii), ausgewählt aus Ammonium, Alkali oder Erdalkalimetallsalz einer Carbonsäure enthält.

Weitere Ausführungsformen der vorliegenden Erfindung sind den Ansprüchen, der Beschreibung und den Beispielen zu entnehmen.

Polyisocyanurat-Schaumstoffe, insbesondere Polyisocyanurat-Hartschaumstoffe, sind seit langem bekannt und vielfach in der Literatur beschrieben. Ihre Herstellung erfolgt üblicherweise durch Umsetzung von Polyisocyanaten mit Verbindungen mit gegenüber Isocyanatgruppen reaktiven Wasserstoffatomen, zumeist Polyetherole, Polyesterole oder beide, wobei der Isocyanatindex 180 und größer ist. Dadurch bilden sich zusätzlich zu den Urethanstrukturen, die durch die Umsetzung von Isocyanaten mit Verbindungen mit reaktiven Wasserstoffatomen entstehen, durch Reaktion der Isocyanatgruppen untereinander Isocyanuratstrukturen oder weitere Strukturen, die durch die Reaktion von Isocyanatgruppen mit anderen Gruppen, wie zum Beispiel Polyurethangruppen, entstehen.

Im Allgemeinen werden bei der Herstellung von Polyisocyanurat-Hartschaumstoffen sowohl Treib- und Gelkatalysatoren, meistens Amine, als auch Trimerisierungskatalysatoren als Katalysatoren eingesetzt. Auch Katalysatorsysteme, bestehend aus einer Mischung verschiedener Katalysatoren, finden sich im Stand der Technik.

Diese Polyisocyanurat-Hartschaumstoffe werden üblicherweise unter Verwendung von physikalischen und chemischen Treibmitteln hergestellt. Unter chemischen Treibmitteln versteht man Verbindungen, die durch Reaktion mit Isocyanat gasförmige Produkte bilden. Unter physikalischen Treibmitteln versteht man Verbindungen, die in den Einsatzstoffen der Polyurethan-Herstellung gelöst oder emulgiert sind, und unter den Bedingungen der Polyurethanbildung verdampfen. Als chemische Treibmittel kommen insbesondere Wasser sowie Carbonsäuren in Betracht. Als physikalische Treibmittel werden zum Beispiel Fluorchlorkohlenwasserstoffe, Wasserstofffluorkohlenwasserstoffe, Kohlenwasserstoffe sowie flüssiges CO₂ eingesetzt.

JP 2002338651 beschreibt zur Herstellung eines Polyurethanschaums die Verwendung von Wasser als chemisches Treibmittel und eines Katalysatorsystems, welches unter anderem aus dem Salz einer Carbonsäure mit 3 bis 20 C-Atomen und einem quartärnären Ammoniumsalz besteht. Im Rahmen der hierbei angeführten Beispiele werden als zusätzliche Katalysatoren Pentamethyldiethyletriamin (PMDETA) und Dimethylcyclohexylamin (DMCHA) verwendet.

Die Verwendung von Carbonsäuren, vornehmlich Ameisensäure, als chemischem Treibmittel zur Darstellung von Polyurethanschaumstoffen ist ebenfalls seit langem bekannt.

US 5,143,945 beschreibt die Herstellung eines Polyisocyanurat-Schaumstoffs unter Verwendung eines Trimerisierungskatalysators und den Treibmitteln Wasser und Ameisensäure.

US Patent 5214076 beschreibt die Herstellung eines offenzelligen carbodiimid-isocyanurat Schaumstoffs aus aromatischen Polyesterolen und aromatischen Aminpolyetherolen in Gegenwart von einem Treibmittel, das Ameisensäure beinhalten kann, und einem Treibkatalysator, beispielsweise Pentamethyldiethylentriamin.

US Patente 5478494 und 5770635 hingegen beschreiben spezifische Polyolzusammensetzungen zur Herstellung von Polyisocyanurat-Hartschaumstoffen für die diskontinuierliche Produktion von Sandwichelementen unter Verwendung von Ameisensäure als Treibmittel und einem verzögerten Treibkatalysator, beispielsweise N,N,N',N'-Tetramethyl-2,2'-diaminodiethylether, der beispielsweise mit Essigsäure blockiert ist, und einem verzögerten Gelkatalysator, aufweisend alicyclische oder aliphatische, tertiäre Amine. Die Wirkung der Katalysatoren wird dabei durch Blockierung mit Carbonsäuren verzögert.

EP 1435366 beschreibt die Verwendung eines Novolakpolyetherols zur Herstellung von ameisensäuregetriebenen Polyisocyanurat- und polyurethanmodifizierten Polyisocyanurat-Hartschaumstoffen sowohl im diskontinuierlichen als auch im kontinuierlichen Verfahren. Dabei können ein oder mehrere Katalysatoren, beispielsweise Aminkatalysatoren, wie Pentamethyldiethylentriamin und Zinnkatalysatoren, wie Zinnsalze von Carbonsäuren verwendet werden.

Isocyanurat-Hartschaumstoffe werden vorzugsweise im kontinuierlichen Verfahren, beispielsweise nach dem Doppelbandverfahren, hergestellt. Dem Einsatz von Wasser als chemischem Treibmittel bei der Herstellung von Polyisocyanurat-Hartschaumstoffen sind dabei Grenzen gesetzt, da bei der Reaktion mit Isocyanat eine erhebliche Menge an Isocyanat für die Erzeugung des Treibgases verbraucht wird.

Will man die für Isocyanurat-Hartschaumstoffe charakteristisch guten Brandeigenschaften erreichen sind Isocyanat-Indices von > 300 erforderlich. Zusätzlich möchte man aufgrund der vorhandenen Maschinentechnik sowie zur Gewährleistung einer optimalen Vermischung der Isocyanat und der Polyolkomponente gern mit den üblichen Mischungsverhältnissen von Polyol : Isocyanat von 100 : 110 bis 100 : 230 arbeiten. Selbst mit einem Mischungsverhältnis von Polyol : Isocyanat = 100 : 230 ist bereits ab einer Wassermenge von einem Gewichtsteil oder mehr, bezogen auf die Polyolkomponente, der angestrebte Isocyanatindex von > 300 nicht mehr zu erreichen. Deshalb wird im Stand der Technik meist nur ein geringer Anteil an Wasser und zusätzlich ein physikalisches Treibmittel, meistens Kohlenwasserstoffe, wie zum Beispiel Pentan, in großen Mengen eingesetzt, um die gewünschte Treibgasmenge zu erhalten. Das hat wiederum negative Auswirkungen auf die flammhemmenden Eigenschaften des Polyisocyanurat-Hartschaumstoffes. Der Einsatz von Fluorchlorkohlenwasserstoffen und Wasserstofffluorkohlenwasserstoffen ist aus Umweltgesichtspunkten und wegen des meist sehr hohen Preises oftmals keine gute Alternative.

Ameisensäure als Treibmittel hat bei den im Stand der Technik bekannten Verfahren den Nachteil, dass die mit Ameisensäure getriebenen Polyisocyanurat-Hartschaumstoffe nur langsam aushärten. Dies führt im diskontinuierlichen Verfahren zu sehr langen Formzeiten und damit zu einer geringen Wirtschaftlichkeit und im kontinuierlichen Verfahren zu sehr langsamen Bandlaufzeiten, die technisch nur schwer zu handhaben sind.

Der Einsatz von Polyisocyanurat-Hartschaumstoffen erfolgt insbesondere zur Wärmedämmung, beispielsweise von Kühlgeräten, Behältern oder Gebäuden, hier speziell als Dämmplatten oder Metall-Isocyanurat-Metall-Sandwichelemente. Für Bauprodukte hat die Europäische Kommission einen einheitlichen Brandtest, den sogenannten "Single Burning Item"-Test (SBI-Test) nach EN 13823 entwickelt, der neben der Ausbreitung des Feuers im Material auch die Rauchentwicklung berücksichtigt. Weiterhin wurden in den letzten Jahren von Versicherungsgesellschaften zusätzliche Brandtests eingeführt die zum Teil deutlich über die gesetzlichen Anforderungen hinaus gehen. Ein Beispiel dafür ist der Loss prevention standard LPS 1181.

Ein generelles Problem bei solchen Polyisocyanurat-Hartschaumstoffen weiterhin ist die Ausbildung von Oberflächendefekten, vorzugsweise an der Grenzfläche zu metallischen Deckschichten. Dabei handelt es sich meist um Gaseinschlüsse zwischen Schaum und Blech. Diese Schaumoberflächendefekte bedingen, vor allem unter Wärmeinwirkung, die Ausbildung einer unebenen Metalloberfläche. Solche Oberflächendefekte können zum Beispiel durch die in den Rückseitenlacken der Deckschichten enthaltenen Additiven, wie Fließverbesserer, Entlüfter oder Hydrophobiermittel, hervorgerufen werden. Da Sandwichelemente überwiegend zur Gebäudeisolierung eingesetzt werden, erfüllen sie nicht nur den Zweck der Isolierung sondern gestalten auch in entscheidendem Maße die Außenseite dieser Gebäude. Unebenheiten in der Metalloberfläche durch Oberflächendefekte führen so zu einem qualitativ minderwertigen Produkt. Eine Verbesserung der Schaumoberfläche vermindert die Häufigkeit des Auftretens solcher Oberflächendefekte und führt somit zu einer optischen Verbesserung der Oberfläche von solchen Metall-Polyisocyanurat-Metall-Sandwichelementen.

Weiterhin kann es durch die Oberflächenstörungen ebenfalls zu einer Beeinträchtigung der Haftung der Deckschichten am Schaumstoff kommen. Dieses ist ebenfalls ein großes Problem, wenn beispielsweise diese Elemente zur Konstruktion der Fassade eines Gebäudes eingesetzt werden. Ist die Haftung der Deckschichten aufgrund von Oberflächendefekten stark beeinträchtigt so kann es im Extremfall zu kompletten Blechablösungen kommen.

Ferner ist eine verbesserte Aushärtung der Polyisocyanurat-Hartschäume auch gegenüber wassergetriebenen Systemen wünschenswert, da somit der Polyisocyanurat-Hartschaum bereits zu einem früheren Zeitpunkt eine ausreichende Härte aufweist, und somit schneller zu entformen ist. Dies würde eine Produktivitätserhöhung ermöglichen, wodurch die Anlagen wirtschaftlicher betrieben werden können. Ebenso ließe sich ein solcher Schaumstoff im kontinuierlichen Verfahren bei ausreichenden Bandgeschwindigkeiten herstellen. Dabei gilt auch hier, dass die Produktivität und damit die Wirtschaftlichkeit der Anlage durch schnellere Aushärtezeiten und damit mögliche höhere Bandgeschwindigkeiten erhöht werden kann, so dass Ameisensäure als Treibmittel für die wirtschaftliche kontinuierliche Herstellung von Sandwichelementen zugänglich werden würde.

Aufgabe der vorliegenden Erfindung war es somit, die Schaumoberfläche von Polyisocyanurat-Hartschaumstoffen gegenüber dem Stand der Technik zu verbessern und gleichzeitig die Häufigkeit von Oberflächendefekten zu verringern. Ebenso war es Aufgabe der vorliegenden Erfindung, Ameisensäure getriebene Polyisocyanurat-Hartschaumsysteme zur Verfügung zu stellen die über eine gute Aushärtung, E-Modul, Druckfestigkeit sowie geringe Sprödigkeit verfügen und in diesen Merkmalen vergleichbar sind mit bekannten Polyisocyanurat-Hartschaumstoffen, so dass eine kontinuierliche Produktion, zum Beispiel mit Hilfe des Doppelbandverfahrens, möglich ist.

Eine weitere Aufgabe der Erfindung war die Bereitstellung eines Polyisocyanurat-Hartschaumstoffs, der beim SBI-Test, vor allem in den Messwerten Figra, THR, Smogra und TSP, gegenüber dem Stand der Technik verbesserte Ergebnisse zeigt.

Weiterhin war es Aufgabe der Erfindung, ein Hartschaumsystem zur Verfügung zu stellen, welches ohne den Einsatz von halogenierten Treibmitteln den Feuerstandard LPS 1181 part1 grade B erfüllt.

Überraschenderweise wurde gefunden, dass durch ein Verfahren nach Anspruch 1 Polyisocyanurat-Hartschaumstoffe hergestellt werden können, wobei die Schaumstoffoberfläche der hergestellten Hartschaumstoffe verbessert und dadurch die Häufigkeit des Auftretens von Oberflächendefekten bei Polyisocyanurat-Hartschaumstoff Sandwichelementen verringert werden konnten. Gleichzeitig konnte die Aushärtung sowie andere mechanische Eigenschaften, wie zum Beispiel die Druckfestigkeit und das E-Modul, auf dem Niveau der Polyurethan-Hartschaumstoffe gehalten und zum Teil sogar verbessert werden. Ebenfalls kann ein Polyisocyanuat-Hart-schaumstoff hergestellt werden, der die Erfordernisse des SBI-Tests erfüllt und gegenüber den aus dem Stand der Technik bekannten Polyurethan-Hartschaumstoffen deutliche Verbesserungen in den Messwerten Figra, THR, Smogra und TSP des SBI-Tests aufweist.

Als Polyisocyanurate im Sinne der vorliegenden Erfindung werden dabei polymere Isocyanataddukte verstanden, die neben Urethangruppen noch weitere Gruppen enthalten. Diese weiteren Gruppen entstehen beispielsweise durch Reaktion der Isocyanatgruppe mit sich selbst, wie Isocyanuratgruppen, oder durch die Reaktion der Isocyanatgruppen mit anderen Gruppen als mit Hydroxylgruppen, wobei die genannten Gruppen meist gemeinsam mit den Urethangruppen im Polymer vorliegen. Der Isocyanatindex von Polyisocyanuraten im Sinn der Erfindung ist 180 und größer.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Im Rahmen der Erfindung wird unter Polyisocyanurat-Hartschaumstoff ein geschäumtes Polyisocyanurat verstanden, bevorzugt ein Schaumstoff gemäß DIN 7726, d. h. der Schaumstoff weist eine Druckspannung bei 10 % Stauchung bzw. Druckfestigkeit nach DIN 53 421 / DIN EN ISO 604 von größer gleich 80 kPa, bevorzugt größer gleich 150 kPa, besonders bevorzugt größer gleich 180 kPa auf. Weiterhin verfügt der Polyisocyanurat-Hartschaumstoff nach DIN ISO 4590 über eine Geschlossenzelligkeit von größer 85%, bevorzugt größer 90%.

Dabei wird ein erfindungsgemäßer Polyisocyanurat-Hartschaumstoff durch ein Verfahren hergestellt, bei dem man
a) Isocyanate mit
b) Verbindungen mit gegenüber Isocyanaten reaktiven Gruppen,
c) Treibmittel, enthaltend Ameisensäure,
d) einem Katalysatorsystem und gegebenenfalls
e) Schaumstabilisatoren, Flammschutzmittel und sonstigen Zusatzstoffen umsetzt, wobei das Katalysatorsystem
i) mindestens eine Verbindung der Struktur: 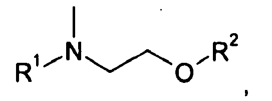
wobei R¹ für CH₃, CH₂-CH₂-N(CH₃)₂ oder CH₂-CH₂OH, und
R² für H, CH₂-CH₂OH oder CH₂-CH₂N(CH₃)₂
steht, und
mindestens einen Trimerisierungskatalysator (ii), ausgewählt aus Ammonium, Alkali oder Erdalkalimetallsalz einer Carbonsäure enthält.

Zu den eingesetzten Komponenten a) bis e) ist im Einzelnen folgendes zu sagen.
a) Als Isocyanate können alle bekannten organischen Di- und Polyisocyanate verwendet werden. Dabei kommen speziell die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandüsocyanat (MDI) und insbesondere Roh-MDI, das heißt Gemische aus Diphenylmethandiisocyanat und Polyphenylenpolymethylenpolyisocyanaten, sogenanntem polymeren MDI. Die Isocyanate können auch modifiziert sein, beispielsweise durch Einbau von Uretdion-, Carbamat-, Isocyanurat-, Carbodiimid-, Allophanat- und insbesondere Urethangruppen.
   Zur Herstellung von Polyisocyanurat-Hartschaumstoffen wird insbesondere Roh-MDI eingesetzt.
   Weiterhin können als Isocyanatkomponente Prepolymere eingesetzt werden. Diese Prepolymere werden aus den oben beschriebenen Isocyanaten sowie den weiter unten beschriebenen Polyethern, Polyestern oder beiden hergestellt und weisen einen NCO-Wert von 20 bis 30, bevorzugt 25 bis 30, auf. In diesen Prepolymeren können bereits Isocyanuratstrukturen enthalten sein.
b) Als Verbindungen mit gegenüber Isocyanat reaktiven Gruppen, das heißt, mit Isocyanatgruppen reaktiven Wasserstoffatomen, kommen insbesondere solche in Betracht, die mindestens 1,5, beispielsweise 1,5 bis fünf, bevorzugt zwei oder drei reaktive Gruppen, ausgewählt aus OH-Gruppen, SH-Gruppen, NH-Gruppen, NH₂-Gruppen und CH-aciden Gruppen, wie z.B. β-Diketo-Gruppen, bevorzugt OH-Gruppen, im Molekül tragen. Dabei ist die Anzahl an reaktiven Gruppen im Molekül als Mittelwert über die Anzahl der Moleküle mit gegenüber Isocyanatgruppen reaktiven Wasserstoffatomen zu verstehen.

Zur Herstellung der nach dem erfindungsgemäßen Verfahren bevorzugt hergestellten Polyisocyanurat-Hartschaumstoffe kommen insbesondere Verbindungen mit 1,5 bis 8 OH-Gruppen zum Einsatz. Vorzugsweise eingesetzt werden Polyetherole, Polyesterole oder beide. Besonders bevorzugt weisen diese Polyetherole und/oder Polyesterole 1,5 bis 8, insbesondere 2 bis 4 OH Gruppen im Molekül auf. Die Hydroxylzahl der verwendeten Polyetherole und/oder Polyesterole beträgt bei der Herstellung von Polyisocyanurat-Hartschaumstoffen vorzugsweise 100 bis 850 mgKOH/g, besonders bevorzugt 100 bis 400 mgKOH/g und insbesondere 150 bis 300 mgKOH/g. Die Molekulargewichte sind vorzugsweise größer als 400 g/mol.

Polyetherpolyole werden nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 4 reaktive Wasserstoffatome gebunden enthält, oder durch kationische Polymerisation mit Lewis-Säuren, wie Antimonpentachlorid, Borfluorid-Etherat oder Bleicherde als Katalysatoren aus einem oder mehreren Alkylenoxiden mit 2 bis 4 Kohlenstoffatomen im Alkylenrest, hergestellt.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid, besonders bevorzugt Ethylenoxid. Die Alkylenoxide können einzeln, alternierend nacheinander oder als Mischungen verwendet werden.

Als Startermoleküle kommen beispielsweise Ethylenglycol, Diethylenglycol, Glycerin, Trimethylolpropan, Pentaerythrit, Saccharose, Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht. Bevorzugt verwendet werden Ethylenglycol, Diethylenglycol, glycerin, Trimethylolpropan und Toluoldiamin.

Die eingesetzten Polyesteralkohole werden zumeist durch Kondensation von mehrfunktionellen Alkoholen mit 2 bis 12 Kohlenstoffatomen, wie zum Beispiel Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Rezyklaten von Polyethylenterephthalat und den Isomeren von Naphthalindicarbonsäuren, vorzugsweise aus Phthalsäure, Isophthalsäure, Terephthalsäure, den Rezyklaten von Polyethylenterephthalat und den Isomeren von Naphthalindicarbonsäuren oder deren Anhydriden, hergestellt. Besonders bevorzugt sind Polyesterole, die aus Phthalsäureanhydrid und/oder Terephthalsäure und/oder Rezyklaten von Polyethylenterephthalat hergestellt werden.

Als weitere Ausgangsstoffe bei der Herstellung der Polyester können auch hydrophobe Stoffe mitverwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol%, besonders bevorzugt 4 bis 15 Mol%.

Die eingesetzten Polyesterole haben vorzugsweise eine Funktionalität von 1,5 - 5, besonders bevorzugt 1,5 - 4.

In einer bevorzugten Ausführungsform enthalten die Verbindungen mit gegenüber Isocyanatgruppen reaktiven Wasserstoffatomen mindestens einen Polyester. In einer besonders bevorzugten Ausführungsform enthalten die Verbindungen mit gegenüber Isocyanatgruppen reaktiven Wasserstoffatomen mindestens einen Polyester der mindestens einen hydrophoben Stoff enthält.

Ferner können Kettenverlängerungs- und/oder Vernetzungsmitteln eingesetzt werden. Als Kettenverlängerungs- und/oder Vernetzungsmittel kommen insbesondere zwei- oder dreifunktionelle Amine und Alkohole, insbesondere Diole, Triole oder beide, jeweils mit Molekulargewichten kleiner als 400, vorzugsweise von 60 bis 300, zum Einsatz.

Als Treibmittelkomponente c) wird ein Treibmittel, enthaltend Ameisensäure, eingesetzt. Diese kann als alleiniges Treibmittel oder im Gemisch mit Wasser und/oder physikalischen Treibmitteln eingesetzt werden. Vorzugsweise werden als physikalische Treibmittel Kohlenwasserstoffe, halogenierte Kohlenwasserstoffe, wie Fluorchlorkohlenwasserstoffe (FCCs), Wasserstofffluorchlorkohlenwasserstoffe (HFCCs) oder Wasserstofffluorkohlenwasserstoffe (HFCs) und andere Verbindungen, wie zum Beispiel perfluorierte Alkane, wie Perfluorhexan, sowie Ether, Ester, Ketone und Acetale oder Mischungen daraus verwendet. Bevorzugt sind dabei Wasserstofffluorkohlenwasserstoffe, wie zum Beispiel 1,1,1,3,3-Pentafluorbutan(HFC 365mfc), 1,1,1,3,3-Pentafluorpropan (HFC 245fa), 1,1,1,2-Tetrafluorethan (HFC 134a) oder 1,1,1,2,3,3,3 Heptafluorpropan (HFC 227ea) sowie Mischungen daraus. Bevorzugt können weiterhin Kohlenwasserstoffe, wie zum Beispiel die Isomeren und Derivate des Pentans, als physikalische Treibmittel eingesetzt werden.

Bevorzugt wird Ameisensäure in Kombination mit Wasserstofffluorkohlenwasserstoffen (HFC) und/oder Kohlenwasserstoffen eingesetzt. In einer bevorzugten Ausführungsform enthält die Treibmittelkomponente c) abgesehen von einem maximal 1,5 Gew.-%igen Wasseranteil der Ameisensäure, kein weiteres Wasser. Der Gesamtwassergehalt der Komponenten b) bis e) liegt dabei vorzugsweise bei unter 0,5 Gew.-%, besonders bevorzugt unter 0,3 Gew.-%, jeweils bezogen auf die Komponenten b) bis e). In einer weiteren bevorzugten Ausführungsform wird Ameisensäure in Kombination mit Kohlenwasserstoffen eingesetzt, insbesondere in Kombination mit n-Pentan oder Isomeren des Pentans.

Die Treibmittelkomponente c) wird üblicherweise in einer Menge von 1 bis 30 Gew.-%, bevorzugt 2 bis 20 Gew.-%, und besonders bevorzugt 2 bis 10 Gew.-%, bezogen auf das Gesamtgewicht der Komponenten b) bis e), eingesetzt.

Vorzugsweise ist die molare Konzentration an Ameisensäure in der Treibmittelkomponente c) größer 10 mol-%, bevorzugt größer 20 mol%, besonders bevorzugt größer 35 mol%.

Es ist ferner bevorzugt, dass die Treibmittel-Komponente c) weniger als 5 Gew.-%, mehr bevorzugt weniger als 2 Gew.-%, besonders bevorzugt weniger als 1 Gew.-% und insbesondere 0 Gew.%, bezogen auf das Gesamtgewicht der Komponenten b) bis e), an Fluorchlorkohlenwasserstoffen und/oder Chlorkohlenwasserstoffen enthält.

Das Katalysatorsystem d) zur Herstellung von erfindungsgemäßen Polyisocyanurat-Hartschaumstoffen enthält
i) eine Verbindung der Struktur 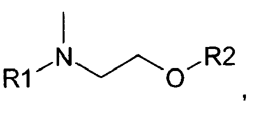
ii) einen Trimerisierungskatalysator und gegebenenfalls
iii) eine weitere Katalysatorkomponente,
wobei die weitere Katalysatorkomponente iii) eine Aminverbindung mit maximal 6 Stickstoffatomen ist, die von den Katalysatorkomponenten i) und ii) verschieden ist.

Zu den erfindungsgemäßen Katalysatorsystem-Komponenten i), ii) und iii) ist folgendes zu sagen.

Die Verbindung i) zeichnet sich dadurch aus das R¹ = CH₃, CH₂CH₂N(CH₃)₂ oder CH₂CH₂OH sowie R² = H, CH₂CH₂OH oder CH₂CH₂N(CH₃)₂ ist. Im speziellen zeichnet sich diese Katalysatorkomponente i) dadurch aus, dass es sich um Bis-(dimethylaminoethyl)ether, N,N,N-Trimethylaminoethylethanolamin, N,N,N-Trimethyl-N-hydroxyethyl-bis(aminoethyl)ether, N,N-Dimethylaminoethoxyethanol oder um Dimethylethanolamin handelt.

Verbindung ii) zeichnet sich dadurch aus, dass sie die Trimerisierungsreaktion der NCO-Gruppen untereinander katalysiert und ist ausgewählt aus Ammonium, Alkali- oder Erdalkalimetallsalzen von Carbonsäuren. Vorzugsweise werden dabei die Salze von linearen oder verzweigtkettigen, substituierten oder unsubstituierten, gesättigten oder ungesättigten aliphatischen oder aromatischen Carbonsäuren mit 1 bis 20 Kohlenstoffatomen, wie zum Beispiel Ameisensäure, Essigsäure, Oktansäure Weinsäure, Citronensäure, Ölsäure, Stearinsäure und Rizinolsäure oder substituierte oder unsubstituierte, aromatische Carbonsäuren mit 6 bis 20 Kohlenstoffen, wie Benzoesäure und Salicylsäure verwendet. Besonders bevorzugt sind Kaliumformiat, Kaliumacetat, Kaliumoktoat, Ammoniumformiat, Ammoniumacetat und Ammoniumoktoat, insbesondere Kaliumformiat.

Verbindung (iii) zeichnet sich dadurch aus, dass sie 1, 2, 3, 4, 5 oder 6 Stickstoffatome und weniger als 5 Sauerstoffatomen enthält. Besonders bevorzugt werden N-Methyldiethanolamin, Hexamethyltriethylentetramin, Pentamethyldiethylenetriamin, Bis-(dimethylaminoethyl)ether, N,N,N-Trimethylaminoethylethanolamin, N,N,N-Trimethyl-N-hydroxyethyl-bis(aminoethyl)ether, N,N-Dimethylaminoethoxyethanol, N,N-bis(3-dimethylaminopropyl)amino-2-propanolamin, Tetramethylhexamethylendiamin, Tris-3-dimethylaminopropylamin, Dimethylethanolamin, Triethylamin, Dimethylcyclohexylamin, Pentamethyldipropylentriamin, N-Methylimidazol, 1,3,5-Tris(3-dimethylaminopropyl)-hexahydro-s-triazin, 2,4,6-Tris(dimethylaminoethyl)phenol, N-dimethylaminopropylharnstoff oder Bis-N-dimethylaminopropylharnstoff verwendet. Insbesondere werden Bis-(dimethylaminoethyl)ether, N,N,N-Trimethylaminoethylethanolamin, N,N-Dimethylaminoethoxyethanol oder Dimethylethanolamin verwendet.

Bevorzugt werden Mischungen eingesetzt welche als Komponenten i) Bis-(dimethylaminoethyl)ether, N,N,N-Trimethylaminoethylethanolamin oder N,N-Dimethylaminoethoxyethanol und als Komponente ii) Kaliumformiat aufweisen. In einer weiteren speziellen Ausführungsform enthält die Mischung zusätzlich eine Komponente iii), welche aus N,N,N-Trimethylaminoethylethanolamin, N,N-Dimethylaminoethoxyethanol oder Dimethylethanolamin besteht. In einer weiteren speziellen Ausführungsform besteht die Katalysatormischung aus i) Bis-(dimethylaminoethyl)ether, ii) Kaliumformiat und iii) N,N,N-Trimethylaminoethylethanolamin.

Der molare Anteil des Katalysators ii) an der Gesamtkatalysatormischung, bestehend aus i), ii) und gegenbenenfalls iii), beträgt 30 - 90 mol%, bevorzugt 40 - 90 mol%, besonders bevorzugt 45 - 85 mol%. Dabei wird als Katalysator ii) Kaliumformiat verwendet.

Unter e) sind Verbindungen zusammengefasst, die bei der Herstellung von Polyisocyanuraten üblicherweise zusätzlich verwendet werden können. Diese umfassen Schaumstabilisatoren, Flammschutzmittel und sonstige Zusatzstoffe, wie beispielsweise weitere Katalysatoren und Antioxidantien.

Als Schaumstabilisatoren werden Stoffe bezeichnet , welche die Ausbildung einer regelmäßigen Zellstruktur bei der Schaumbildung fördern.

Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 - 4, besonders bevorzugt 1 - 3 Gew%, bezogen auf das Gesamtgewicht der Komponenten b) - e), verwendet.

Als Alkoxylierungsreagenzien können beispielsweise Ethylenoxid, Propylenoxid, Poly-THF sowie höhere Homologe verwendet werden.

Als Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylalkohol, Tribromneopentylalkohol und PHT-4-Diol, sowie chlorierte Phosphate, wie z. B., Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyisocyanurat-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Bevorzugt werden dabei Tris-(2-chlorisopropyl)phosphat (TCPP), Diethyl-ethanphosphonat (DEEP), Diphenylkresylphosphat (DPK) oder expandierbarer Graphit eingesetzt. Eine besonders bevorzugte Ausführungsform beinhaltet ausschließlich halogenfreie Flammschutzmittel.

Die Flammschutzmittel werden im Rahmen der vorliegenden Erfindung bevorzugt in einer Menge von 0 bis 60 Gew.-%, besonders bevorzugt von 5 bis 50 Gew.-%, mehr bevorzugt von 10 bis 30 Gew.-%, insbesondere von 5 bis 40 Gew.-%, bezogen auf das Gesamtgewicht der Komponenten b) bis e) verwendet.

Zusätzlich können die üblichen Füllstoffe eingesetzt werden.

Zur Herstellung der Polyisocyanurat-Hartschaumstoffe werden die Polyisocyanate a) und die Komponenten b) bis e) in solchen Mengen zur Umsetzung gebracht, dass der Isocyanatindex 180 bis 700, bevorzugt 250 bis 500, insbesondere 300 bis 400 beträgt.

Die Polyisocyanurat-Hartschaumstoffe können diskontinuierlich oder kontinuierlich mit Hilfe bekannter Verfahren (z. B. Doppelband) hergestellt werden. Die hier beschriebene Erfindung bezieht sich auf beide Verfahren, vorzugsweise jedoch auf das kontinuierliche Doppelbandverfahren. Dabei werden eine obere und eine untere Deckschicht, zum Beispiel aus Metall, Aluminiumfolie oder Papier, von einer Rolle abgecoilt und gegebenenfalls profiliert, erwärmt und coronabehandelt, um die Beschäumbarkeit der Deckschichten zu verbessern. Danach wird das Reaktionsgemisch, bestehend aus den Komponenten a) bis d) und gegebenenfalls e), zum Beispiel in einem Hochdruckmischkopf gemischt, auf die untere Deckschicht aufgetragen und zwischen oberer und unterer Deckschicht im sogenannten Doppelband ausgehärtet. Anschließend werden die Elemente auf die gewünschte Länge zugeschnitten. Gegebenenfalls wird auf die untere Deckschicht vor dem Auftragen des Polyisocyanurat-Hartschaumstoffsystems zusätzlich ein Primer aufgetragen.

Als besonders vorteilhaft hat es sich erwiesen, nach dem Zweikomponenten-Verfahren zu arbeiten. Dazu bilden die Verbindungen mit mindestens zwei gegenüber Isocyanaten reaktiven Gruppen, chemische Treibmittel, Katalysatoren und gegebenenfalls Schaumstabilisatoren, Flammschutzmittel und sonstigen Zusatzstoffen die sogenannte Polyolkomponente, während die zur Reaktion verwendeten Isocyanate die sogenannte Isocyanatkomponente bilden. Physikalische Treibmittel können sowohl in der Polyolkomponente als auch der Isocyanatkomponente enthalten sein. Bei der Herstellung des eigentlichen Polyisocyanurat-Hartschaumstoffs werden dann Polyolkomponente und Isocyanatkomponente miteinander zur Reaktion gebracht.

Die Treibmittelkomponente c), insbesondere die Ameisensäure, kann dabei vor Beginn der Produktion des Polyisocyanurat-Hatschaumstoffs oder während der Herstellung des Polyisocyanurat-Hartschaums zur Polyolkomponente zugegeben werden. So kann zum Beispiel die Treibmittelkomponente c), insbesondere die Ameisensäure, während des Herstellungsprozesses des Polyisocyanurat-Hatschaumstoffs separat mittels Niederdrucktechnik in die Polyolkomponente dosiert werden oder aber mittels Hochdrucktechnik direkt am Mischkopf zugegeben werden.

Besondere Vorteile des erfindungsgemäßen Katalysatorsystems sind, dass besonders wenig Oberflächendefekte bei Verwendung des erfindungsgemäßen Katalysatorsystems zur Herstellung des Polyisocyanurat-Hartschaumstoffe erhalten werden. Die Häufigkeit von Oberflächendefekten wird dabei durch eine optische Methode ermittelt. Bei dieser Methode wird in einem Abstand von einem Millimeter zur unteren Deckschicht, das heißt der Deckschicht, auf der die Polyurethan-Reaktionsmischung beispielweise im Doppelbandverfahren, aufgetragen wurde, eine Ebene parallel zur unteren Deckschicht in eine Schaumprobe gelegt und überstehendes Material abgetrennt. Die so erhaltene Schaumoberfläche wird in einem Öffnungswinkel von 5 ° befeuchtet und die Fläche des Schattenwurfs durch Oberflächendefekte ins Verhältnis zur gesamten Schnittfläche gesetzt. Vorzugsweise ist der Anteil der Fläche mit Schattenwurf, bezogen auf die gesamte Fläche, kleiner als 15 %, vorzugsweise kleiner als 10 % und insbesondere kleiner als 5 %.

Die erfindungsgemäßen Polyisocyanurat-Hartschaumstoffe zeichnen sich durch eine gute Druckfestigkeit und eine geringe Sprödigkeit aus. Die Druckfestigkeit, gemessen senkrecht zur Schäumrichtung nach DIN 53421, liegt dabei vorzugsweise bei größer 0,08 N/mm², besonders bevorzugt bei größer 0,12 und insbesondere bei größer 0,15 N/mm².

Weiter weisen erfindungsgemäße Polyisocyanurat-Hartschaumstoffe eine geringe Nadelhöhe auf. Die Nadelhöhe wird an einem Schaumpilz bei einer Einsatzmenge von 80 g im Polystyrolbecher bestimmt. Sie gibt die Höhe an, welche der Schaum nach Erreichen der Abbindezeit bis zum Erreichen der vollständigen Aushärtung noch in die Höhe steigt. Ein zu starkes Nachdrücken des Schaumstoffes nach Erreichen der Abbindezeit ist dabei unerwünscht, da es die mechanischen Eigenschaften des Schaums, wie zum Beispiel E-modul und Druckfestigkeit, negativ beeinflusst. Vorzugsweise ist die Nadelhöhe eines erfindungsgemäßen Polyisocyanurat-Hartschaumstoffs kleiner als 40 mm, besonders bevorzugt kleiner als 35 mm und insbesondere kleiner als 30 mm.

Des weiteren stellen die erfindungsgemäßen Polyisocyanurat-Hartschaumstoffe gute Wärmedämmmaterialien für Kühlgeräte, Behälter und Gebäude dar. Die gegenwärtige Erfindung schließt daher Kühlgeräte, Behälter und Gebäude ein, die erfindungsgemäße Polyisocyanurat-Hartschaumstoffe als Dämmmaterialien enthalten.

Weitere Vorteile der Erfindung sind, dass durch das erfindungsgemäße Katalysatorsystem eine sehr gute Aushärtung des Polyisocyanurat-Hartschaumstoffes erreicht wird. Die Aushärtung ist mit dem Bolzentest bestimmbar. Dabei wird 3, 4, 5, 6, 8 und 10 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs. Diese ist nach 3 Minuten vorzugsweise größer als 60, besonders bevorzugt größer als 65 und insbesondere größer als 70 Newton, und nach 10 Minuten vorzugsweise größer als 130, besonders bevorzugt größer als 140 und insbesondere größer als 150 Newton. In der Summe für die Tests nach 3, 4, 5, 6, 8 und 10 Minuten ist die Kraft vorzugsweise größer als 500, besonders bevorzugt größer als 550 und insbesondere größer als 600 Newton. Damit ist ein erfindungsgemäßer Polyisocyanurat-Hartschaumstoff hervorragend für die Durchführung des Doppelbandverfahrens zur Herstellung von Metall - Polyisocyanurat-Hartschaumstoff - Metall - Sandwichelementen geeignet.

Weiterhin zeichnen sich die Polyisocyanurat-Hartschaumstoffe durch eine besonders geringe Wärmeleitfähigkeit aus, was sie zu hervorragenden Dämmstoffen, zum Beispiel im Bausektor, macht. Die Wärmeleitfähigkeit wir nach DIN 52612 gemessen und beträgt weniger als 30 mW/mK, bevorzugt weniger als 28 mW/mK und besonders bevorzugt weniger als 26 mW/mK, gemessen unmittelbar nach der Herstellung der Polyisocyanurat-Haartschaumstoffe.

Weiter zeichnet sich ein erfindungsgemäßer Hartschaumstoff durch besonders gute Brandeigenschaften, gemessen beispielsweise beim SBI-Test, aus. Dabei werden bei Verwendung von 80 mm dicken Dämmplatten mit Aluminumdeckschichten der Dicke 50 µm vorzugsweise die folgenden Messwerte erreicht: Figra < 250, besonders bevorzugt < 200 W/s, THR < 5,5, besonders bevorzugt < 5,2 MJ, Smogra < 100, besonders bevorzugt < 90 m²/s² und TSP < 110, besonders bevorzugt < 100 m².

Die vorliegende Erfindung soll durch nachfolgende Beispiele veranschaulicht werden:

### Messmethoden:

### Härtung

Die Härtung wurde mit dem Bolzentest ermittelt. Dazu wird 3, 4, 5, 6, 8 und 10 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs. Als Maß für die Sprödigkeit des Polyisocyanarat-Hartschaumstoffes wurde der Zeitpunkt ermittelt, bei dem die Oberfläche des Hartschaumstoffes beim Bolzentest sichtbare Bruchzonen aufwies.

### Oberflächendefekte

Die Prüfkörper für die Beurteilung der Häufigkeit von Oberflächendefekten wurden nach dem Doppelbandverfahren hergestellt.

Die Oberflächendefekte wurden mit dem oben beschriebenen Verfahren bestimmt. Dazu wird eine 20 cm x 30 cm große Schaumprobe wie oben beschrieben vorbehandelt und beleuchtet und anschließend fotografiert. Die Schaumbilder wurden anschließend binarisiert und übereinandergelegt. Die integrierte Fläche der schwarzen Bereiche der Binärbilder wurde in Relation zu der Gesamtfläche der Bilder gesetzt und stellt somit ein Maß für die Häufigkeit von Oberflächendefekten dar.

Des weiteren erfolgte eine zusätzliche qualitative Beurteilung der Oberflächenbeschaffenheit der Polyisocyanurat-Hartschäume, wobei die Deckschicht von einer 1 m x 2 m großen Schaumprobe entfernt wurde und die Oberflächen bezüglich Oberflächendefekte optisch beurteilt wurden.

### Druckfestigkeit

Die Druckfestigkeiten und Druck-E-Module der Polyisocyanurat-Hartschaumstoffe wurden nach DIN 53421 / DIN EN ISO 604 an Sandwichelementen, die nach dem Doppelbandverfahren hergestellt wurden, senkrecht zur Deckschicht bei einer Gesamtrohdichte von 40 g/L gemessen.

### Nadelhöhe

Die Nadelhöhe wird an einem Schaumpilz bei einer Einsatzmenge von 80g in einem Polystyrolbecher mit einem Durchmesser von 10,4 cm bestimmt. Sie gibt die Höhe an, welche der Schaum nach Erreichen der Abbindezeit bis zum Erreichen der vollständigen Aushärtung noch in die Höhe steigt. Ein zu starkes nachdrücken des Schaumstoffes nach Erreichen der Abbindezeit ist dabei unerwünscht.

### Flammfestigkeit

Die Flammhöhe wurde nach EN ISO 11925-2 gemessen.

Der SBI-Test wird nach EN 13823 durchgeführt. Dabei wurden Sandwichelemente mit Aluminium-Deckschichten verwendet, die nach dem Doppelbandverfahren hergestellt wurden, wobei die Schaumdicke 80 mm und die Dicke der Aluminium-Deckschichten jeweils 50 µm betrug. Im SBI-Test wird die Wärmefreisetzung [W/s] beim beflammen mit einem standardisiertem Brenner gemessen. Die bestimmten Parameter sind die Fire Growth Rate (Figra), die Total Heat Release (THR), die Smoke Groth Rate (Smogra) sowie die Total Smoke Production (TSP). Die Figra ist der Quotient aus dem Maximum der Energiefreisetzung und der Zeit bis zum Erreichen dieses Maximums. Die THR ist die gesamte Energiefreisetzung in den ersten 10 Minuten nach Beginn der Beflammung. Die Smogra ist der Quotient aus dem Maximum der Rauchfreisetzung und der Zeit bis zum Erreichen des Maximums. Die TSP ist die gesamte Rauchentwicklung in den ersten 10 Minuten nach Beginn der Beflammung.

Die Durchführung des Test Loss Prevention Standard LPS 1181 part 1 grade B ist in der entsprechenden Norm des Loss Prevention Certification Board (LPCB) vom 16.9.2005 nachzulesen. Dabei wird eine Garage aus Sandwichelementen aufgebaut und einem sehr anspruchsvollem Brandszenario unterzogen. Entscheidend für das Bestehen des Tests ist dabei die Brandausbreitung.

Herstellung eines Polyisocyanurat-Hartschaumstoffes

Die Isocyanate sowie die mit Isocyanat reaktiven Komponenten wurden zusammen mit den Treibmitteln, Katalysatoren und allen weiteren Zusatzstoffen bei einer Kennzahl von 350 verschäumt. Dabei wurde jeweils auf eine konstante Abbindezeit von 45 Sekunden sowie eine Gesamtrohdichte von 45 g/L eingestellt. Bei den Sandwichelementen, die in Doppelbandverfahren hergestellt wurden, betrug die Rohdichte 40 g/L.

Erfindungsgemäße Beispiele

### Beispiel 1

### Polyolkomponente

58 Gewichtsteile Polyesterol, bestehend aus dem Veresterungsprodukt von Phthalsäureanhydrid, Diethylenglycol und Ölsäure mit einer Hydroxylfunktionalität von 1,8 und einer Hydroxylzahl von 200 mg KOH / g
10 Gewichtsteile Polyetherol, bestehend aus dem Ether von Ethylenglycol und Ethylenoxid mit einer Hydroxylfunktionalität von 2 und einer Hydroxylzahl von 200 mg
KOH/g
30 Gewichtsteile Flammschutzmittel Trischlorisopropylphosphat (TCPP)
2 Gewichtsteile Stabilisator; Tegostab B 8443 (siliconhaltiger Stabilisator)
6 Gewichtsteile n-Pentan
2,1 Gewichtsteile Ameisensäure (99%)
1,5 Gewichtsteile Kaliumformiat (36 Gew.-% in Ethylenglycol)
1,4 Gewichtsteile N,N,N-Trimethylaminoethylethanolamin (Dabco T)

### Isocyanatkomponente

190 Gewichtsteile Lupranat M50 (polymeres MDI)

Die Komponenten A und B wurden wie oben angegeben miteinander verschäumt. Die Ergebnisse des Bolzentests, der Sprödigkeit, der Druckfestigkeit, des Druck-E-Moduls, der Nadelhöhe, des SBI-Testsund die qualitative Beurteilung der Oberflächenbeschaffenheit sind in Tabelle 1 angegeben.

### Beispiel 2

Es wurde analog zu Beispiel 1 verfahren mit der Ausnahme, dass anstelle der 1,4 Gewichtsteile N,N,N-Trimethylaminoethylethanolamin (Dabco T) 1,4 Gewichtsteile Bis(2-dimethylaminoethyl)ether (Niax A1; 70% in Dipropylenglycol) verwendet wurden. Die Ergebnisse des Bolzentests, der Sprödigkeit und der Nadelhöhe sind in Tabelle 2 angegeben.

### Beispiel 3

Es wurde analog zu Beispiel 1 verfahren mit der Ausnahme, dass anstelle der 1,4 Gewichtsteile N,N,N-Trimethylaminoethylethanolamin (Dabco T) eine Mischung aus 0,6 Gewichtsteilen N,N,N-Trimethylaminoethylethanolamin (Dabco T) und 0,6 Gewichtsteile Bis(2-dimethylaminoethyl)ether (Niax A1; 70% in Dipropylenglycol) verwendet wurden. Die Ergebnisse des Bolzentests, der Sprödigkeit und der Nadelhöhe sind in Tabelle 2 angegeben.

### Beispiel 4

Es wurde analog zu Beispiel 1 verfahren mit der Ausnahme, dass anstelle der 1,4 Gewichtsteile N,N,N-Trimethylaminoethylethanolamin (Dabco T) eine Mischung aus 0,6 Gewichtsteilen N,N,N-Trimethylaminoethylethanolamin (Dabco T) und 0,6 Gewichtsteilen Dimethylethanolamin (Lupragen N 101) verwendet wurde. Die Ergebnisse des Bolzentests, der Sprödigkeit und der Nadelhöhe sind in Tabelle 2 angegeben.

### Beispiel 5

Es wurde analog zu Beispiel 1 verfahren mit der Ausnahme, dass anstelle der 58 Gewichtsteile eines Polyesterols auf Basis Phthalsäureanhydrid 58 Gewichtsteile eines Polyesterols auf Basis von Terephthalsäure, Diethylglycol, Trimethylolpropan und Ölsäure mit einer Funktionalität von 2,2 und einer OH-Zahl von 230 eingesetzt wurden. Die Ergebnisse des Bolzentests, der Sprödigkeit, der Druckfestigkeit, des Druck-E-Moduls, der Nadelhöhe, des SBI-Tests und die qualitative Beurteilung der Oberflächenbeschaffenheit sind in Tabelle 1 angegeben. Weiterhin wurden mit dieser Reaktionsmischung Sandwichelemente mit Integralfuge hergestellt. Diese Sandwichelemente hatten eine Dicke von 120 mm und wurden an deren Ober- und Unterseite durch 0,6 mm dicke Stahlbleche abgeschlossen. Die Dichte des Schaums betrug 45 g/L. An solchen Wandelementen wurde der Loss Prevention Standard LPS 1181 part 1 grade B-Test durchgeführt, die Ergebnisse sind in Tabelle 1 angegeben.

### Vergleichsbeispiel 1

### Polyolkomponente

58 Gewichtsteile Polyesterol, bestehend aus dem Veresterungsprodukt von Phthalsäureanhydrid, Diethylenglycol und Ölsäure mit einer Hydroxylfunktionalität von 1,8 und einer Hydroxylzahl von 200 mg KOH/g
10 Gewichtsteile Polyetherol, bestehend aus dem Ether von Ethylenglycol und Ethylenoxid mit einer Hydroxylfunktionalität von 2 und einer Hydroxylzahl von 200 mg
KOH/g
30 Gewichtsteile Flammschutzmittel Trischlorisopropylphosphat (TCPP)
2 Gewichtsteile Stabilisator; Tegostab B 8443 (siliconhaltiger Stabilisator)
13 Gewichtsteile n-Pentan
0,8 Gewichtsteile Wasser / Dipropylenglycol-Gemisch (60:40)
1,5 Gewichtsteile Kaliumformiat (36 Gew.-% in Ethylenglycol)
1,4 Gewichtsteile Bis(2-dimethylaminoethyl)ether (Niax A1; 70 Gew.-% in Dipropylenglycol)

### Isocyanatkomponente

190 Gewichtsteile Lupranat M50

Die Komponenten A und B wurden wie angegeben miteinander verschäumt. Die Ergebnisse des Bolzentests, der Sprödigkeit, der Druckfestigkeit, des Druck-E-Moduls, der Nadelhöhe des SBI-Tests und die qualitative Beurteilung der Oberflächenbeschaffenheit sind in Tabelle 1 angegeben. Weiterhin wurden mit dieser Reaktionsmischung Sandwichelemente mit Integralfuge hergestellt. Diese Sandwichelemente hatten eine Dicke von 120 mm und wurden an deren Ober- und Unterseite durch 0,6 mm dicke Stahlbleche abgeschlossen. Die Dichte des Schaums betrug 45 g/L. An solchen Wandelementen wurde der Loss Prevention Standard LPS 1181 part 1 grade B-Test durchgeführt, die Ergebnisse sind in Tabelle 1 angegeben.

### Vergleichsbeispiel 2

Es wurde analog zu Vergleichsbeispiel 1 verfahren, wobei als Treibmittel anstelle von 13 Gewichtsteilen n-Pentan 6 Gewichts-teile n-Pentan und 2,1 Gewichtsteile einer 99 Gew.%-igen Ameisensäure verwendet wurden. Weiter wurde anstelle von 1,4 Gewichtsteilen Bis(2-dimethylaminoethyl)ether (Niax A1; 70 Gew.-% in Dipropylenglycol) 1,6 Gewichtsteile Dimethylcyclohexylamin verwendet. Die Ergebnisse des Bolzentests, der Sprödigkeit und der Nadelhöhe sind in Tabelle 2 angegeben.

### Vergleichsbeispiel 3

Es wurde analog zu Vergleichsbeispiel 1 verfahren, wobei als Treibmittel anstelle von 13 Gewichtsteilen n-Pentan 6 Gewichtsteile n-Pentan und 2,1 Gewichtsteile einer 99 Gew.%-igen Ameisensäure verwendet wurden. Weiter wurde anstelle von 1,4 Gewichtsteilen Bis(2-dimethylaminoethyl)ether (Niax A1; 70 Gew.-% in Dipropylenglycol) 1,6 Gewichtsteile Triethylamin verwendet. Die Ergebnisse des Bolzentests, der Sprödigkeit und der Nadelhöhe sind in Tabelle 2 angegeben.

**Tabelle 1**

| | Beispiel 1 | Beispiel 5 | Vergl-Bsp. 1 |
|---|---|---|---|
| Bolzentest nach 3 min [N] | 70 | 70 | 72 |
| Bolzentest nach 10 min [N] | 145 | 140 | 130 |
| Sprödigkeit; Bruch der Oberfläche nach x Minuten | - | - | 6 |
| Druck-E-Modul [N/mm²] | 4,25 | 4,1 | 3,85 |
| Druckfestigkeit [N/mm²] | 0,15 | 0,16 | 0,15 |
| Nadelhöhe [mm] | 29 | 31 | 35 |
| Flammhöhe nach EN ISO 11925-2 [cm] | 6 | 5 | 11 |
| Figra nach EN 13823 [W/s] | 222 | 210 | 267 |
| THR nach EN 13823 [MJ] | 5,3 | 5,1 | 5,7 |
| Smogra nach EN 13823 [m²/s²] | 83 | 86 | 105 |
| TSP nach EN 13823 [m²] | 101 | 110 | 114 |
| Bodenstörungen [%] / optische Beurteilung | 3,8 / gut | 4,2 / gut | 16,8 / schlecht |
| LPS 1181, part 1, grade B | - | bestanden | nicht bestanden |

Tabelle 1 zeigt, dass durch die Verwendung eines erfindungsgemäßen Katalysatorsystems zur Herstellung von Polyisocyanurat-Hartschaumstoff bei konstanten Druckfestigkeit die Aushärtung beschleunigt, die Sprödigkeit verringert, die Elastizität erhöht, das Brandverhalten nach EN 13823 verbessert sowie die Häufigkeit von Oberflächendefekten verringert werden kann.

**Tabelle 2**

| | Bsp 1 | Bsp 2 | Bsp 3 | Bsp 4 | Vergl.-Bsp 2 | Vergl.-Bsp 3 |
|---|---|---|---|---|---|---|
| Bolzentest nach 3 min [N] | 70 | 68 | 65 | 74 | 61 | 52 |
| Bolzentest nach 10 min [N] | 145 | 159 | 158 | 152 | 135 | 126 |
| Sprödigkeit; Bruch der O-berfläche nach x Minuten | - | - | - | - | 6 | 6 |
| Nadelhöhe [mm] | 29 | 30 | 32 | 31 | 33 | 35 |

Tabelle 2 zeigt, dass die nach dem erfindungsgemäßen Verfahren hergestellten Polyisocyanurat-Hartschaumstoffe ein verbessertes Aushärteverhalten, eine geringere Sprödigkeit und eine verringerte Nadelhöhe zeigen.

## Patentansprüche

1. Verfahren zur Herstellung von Polyisocyanurat-Hartschaumstoffen durch Umsetzung von
a) Isocyanaten mit
b) Verbindungen mit gegenüber Isocyanaten reaktiven Gruppen
c) Treibmittel, enthaltend Ameisensäure,
d) einem Katalysatorsystem und
e) eventuell Schaumstabilisatoren, Flammschutzmittel und sonstigen Zusatzstoffen,
**dadurch gekennzeichnet, dass** das Katalysatorsystem
i) mindestens einen Verbindung der Struktur: 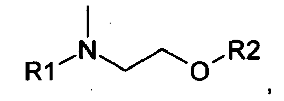
wobei R¹ für CH₃, CH₂-CH₂-N(CH₃)₂ oder CH₂-CH₂OH, und
R² für H, CH₂CH₂OH oder CH₂-CH₂N(CH₃)₂ steht, und
mindestens einen Trimerisierungskatalysator (ii), ausgewählt aus Ammonium, Alkali oder Erdalkalimetallsalz einer Carbonsäure enthält.

2. Verfahren nach Anspruch 1, **dadurch gekennzeichnet, dass** der Trimerisierungskatalysator ii) ausgewählt ist aus der Gruppe, bestehend aus Kaliumformiat, Kaliumacetat, Kaliumoktanoat, Ammoniumformiat, Ammoniumacetat, Ammoniumoktanoat sowie Mischungen daraus.

3. Verfahren nach Anspruch 1 oder 2, **dadurch gekennzeichnet, dass** der Trimerisierungskatalysator ii) Kaliumformiat ist.

4. Verfahren nach einem der Ansprüche 1 bis 3, **dadurch gekennzeichnet, dass** Katalysatorsystem noch eine weitere Katalysatorkomponente iii) aufweist, wobei die Katalysatorkomponente iii) eine Aminverbindung mit maximal 6 Stickstoffatomen ist, die von den Katalysatorkomponenten i) und ii) verschieden ist.

5. Verfahren nach einem der Ansprüche 1 bis 4, **dadurch gekennzeichnet, dass** der Polyisocyanurat-Hartschaumstoff kontinuierlich hergestellt wird.

6. Verfahren nach Anspruch 5, **dadurch gekennzeichnet, dass** der Polyisocyanurat-Hartschaumstoff nach dem Doppelbandverfahren hergestellt wird.

7. Verfahren nach einem der Ansprüche 1 bis 6, **dadurch gekennzeichnet, dass** die Treibmittelkomponente c) mehr als 20 mol%, bevorzugt mehr als 35 mol% Ameisensäure enthält.

8. Verfahren nach einem der Ansprüche 16 bis 7, **dadurch gekennzeichnet, dass** die Treibmittelkomponente c) Ameisensäure und physikalische Treibmittel enthält.

9. Verfahren nach Anspruch 8, **dadurch gekennzeichnet, dass** das physikalische Treibmittel ausschließlich Wasserstofffluorkohlenwasserstoffe beihaltet.

10. Verfahren nach Anspruch 8, **dadurch gekennzeichnet, dass** das physikalische Treibmittel ausschließlich Kohlenwasserstoffe, bevorzugt die Derivate des Pentan beinhaltet.

11. Verfahren nach einem der Ansprüche 1 bis 10, **dadurch gekennzeichnet, dass** die Komponenten b) bis e) weniger als 0,5 Gew.-%, bevorzugt weniger als 0,3 Gew.-% Wasser enthalten.

12. Verfahren nach einem der-Ansprüche 6 bis 11, **dadurch gekennzeichnet, dass** die gegenüber Isocyanaten reaktive Verbindungen mindestens ein Polyersterpolyol beinhalten, dessen Monomerkomponenten 1 bis 20 Mol-% eines hydrophoben Stoffes enthalten.

13. Verfahren nach einem der Ansprüche 1 bis 12, **dadurch gekennzeichnet, dass** zur Herstellung der Polyisocyanurat-Hartschaumstoffe die Polyisocyariatkomponente a) und die Komponenten b) bis e) in solchen Mengen zur Umsetzung gebracht werden, dass der Isocyanatindex 180 bis 700 beträgt.

14. Verwendung des Katalysatorsystems zur Herstellung von ameisensäuregetriebenen Polyisocyanurat-Hartschaumstoffen, wobei das Katalysatorsystem
i) mindestens einen Verbindung der Struktur: 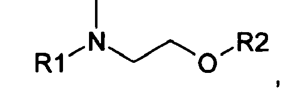 wobei R¹ für CH₃, CH₂-CH₂-N(CH₃)₂ oder CH₂-CH₂OH, und
R² für H, CH₂-CH₂OH oder CH₂-CH₂N(CH₃)₂
steht, und
(ii) mindestens einen Trimerisierungskatalysator, ausgewählt aus Ammonium, Alkali oder Erdalkalimetallsalz einer Carbonsäure enthält.

## Claims

1. A process for producing rigid polyisocyanurate foams by reacting
a) isocyanates with
b) compounds having groups which are reactive toward isocyanates,
c) blowing agent comprising formic acid,
d) a catalyst system and
e) optionally foam stabilizers, flame retardants and other additives,
wherein the catalyst system comprises
i) at least one compound of the structure: 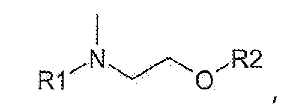
where R¹ is CH₃, CH₂-CH₂-N(CH₃)₂ or CH₂-CH₂OH and
R² is H, CH₂-CH₂OH or CH₂-CE₂N(CH₃)₂,
and
at least one trimerization catalyst (ii) selected from among ammonium, alkali metal and alkaline earth metal salts of a carboxylic acid.

2. The process according to claim 1, wherein the trimerization catalyst ii) is selected from the group consisting of potassium formate, potassium acetate, potassium octanoate, ammonium formate, ammonium acetate, ammonium octanoate and mixtures thereof.

3. The process according to claim 1 or 2, wherein the trimerization catalyst ii) is potassium formate.

4. The process according to any of claims 1 to 3,
wherein the catalyst system comprises a further catalyst component iii) which is an amine compound which has a maximum of 6 nitrogen atoms and is different from the catalyst components i) and ii).

5. The process according to any of claims 1 to 4,
wherein the rigid polyisocyanurate foam is produced continuously.

6. The process according to clam 5, wherein the rigid polyisocyanurate foam is produced by the double belt process.

7. The process according to any of claims 1 to 6,
wherein the blowing agent component c) comprises more than 20 mol%, preferably more than 35 mol% of formic acrid.

8. The process according to any of claims 1 to 7,
wherein the blowing agent component c) comprises formic acid and physical blowing agents.

9. The process according to claim 8, wherein the physical blowing agent consists exclusively of hydrofluoro carbons .

10. The process according to claim 8, wherein the physical blowing agent consist exclusively of hydrocarbons, preferably the derivatives of pentane.

11. The process according to any of claims 1 to 10,
wherein the components b) to e) comprise less than 0.5% by weight, preferably less than 0.3% by weight, of water.

12. The process according to any of claims 6 to 11,
wherein the compounds which are reactive toward isocyanates comprise at least one Polyester polyol whose monomer components comprise from1 to 20 mol% of a hydrophobic substance.

13. The process according to any of claims 1 to 12,
wherein, to produce the rigid polyisocyanurate foams, the Polyisocyanate component a) and the components b) to e) are reacted in such amounts that the isocyanate index is from 180 to 700.

14. The use of the catalyst system for producing rigid polyisocanurate foams blown by means of formic acid, wherein the catalyst system comprises
i) at least one compound of the structure: 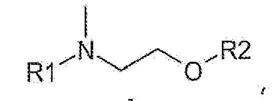 where R¹ is CH₃, CH₂-CH₂-N(CH₃)₂ or CH₂-CH₂OH and
R² is H, CH₂-CH₂OH or CH₂-CH₂N(CH₃)₂,
and
(ii) at least one trimerization catalyst selected from among ammonium, alkali metal and alkaline earth metal salts of a carboxylic acid.

## Revendications

1. Procédé pour la production de mousses rigides à base de polyisocyanurate, par mise en réaction
a) d'isocyanates avec
b) des composés à groupes réactifs vis-à-vis d'isocyanates
c) d'agent d'expansion contentant de l'acide formique,
d) d'un système catalyseur et
e) éventuellement de stabilisants de mousse, d'agents ignifuges et d'autres additifs,
**caractérisé en ce que** le système catalyseur continent
i) au moins un composé de structure 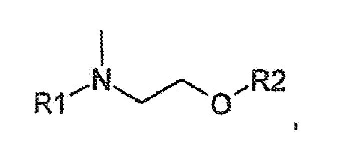
dans laquelle, R¹ représente CH₃,
CH₂-CH₂-N(CH₃)₂ ou CH₂-CH₂OH, et
R² représente H, CH₂-CH₂OH ou CH₂-CH₂N(CH₃)₂,
et
au moins un catalyseur de trimérisation (ii), choisi parmi un sel d'ammonium, de métal alcalin ou alcalino-terreux d'un acide carboxylique.

2. Procédé selon la revendication 1, **caractérisé en ce que** le catalyseur de trimérisation ii) est choisi dans le groupe constitué par le formiate de potassium, l'acétate de potassium, l'octanoate de potassium, le formiate d'ammonium, l'acétate d'ammonium, l'octanoate d'ammonium ainsi que des mélanges de ceux-ci.

3. Procédé selon la revendication 1 ou 2, **caractérisé en ce que** le catalyseur de trimérisation ii) est le formiate de potassium.

4. Procédé selon l'une quelconque des revendications 1 à 3, **caractérisé en ce que** le système catalyseur comporte encore un autre compostant catalytique iii), le composant catalytique iii) étant un composé aminé ayant au maximum 6 atomes d'azote, qui est différent des composants catalytiques i) et ii).

5. Procédé selon l'une quelconque des revendications 1 à 4, **caractérisé en ce que** la mousse rigide à base de polyisocyanurate est produite en continu.

6. Procédé selon la revendication 5, **caractérisé en ce que** la mousse rigide à base de polyisocyanurate est produite selon le procédé à double brande.

7. Procédé selon l'une quelconque des revendications 1 à 6, **caractérisé en ce que** le composant agent d'expansion c) contient plus de 20 % en moles, de préférence plus de 35 % en moles d'acide fornique.

8. Procédé selon l'une quelconque des revendications 1 à 7, **caractérisé en ce que** le compostant agent d'expansion c) contient de l'acide formique et des agents d'expansion physiques.

9. Procédé selon la revendication 8, **caractérisé en ce que** l'agent d'expansion physique comporte exclusivement des hydrocarbures fluorés.

10. Procédé selon la revendication 8, **caractérisé en ce que** l'agent d'expansion physique comporte exclusivement des hydrocarbures, de préférence les dérivés du pentane.

11. Procédé selon l'une quelconque des revendications 1 à 10, **caractérisé en ce que** les composants b) à e) contiennent moins de 0,5 % en poids, de préférence moins de 0,3 % en poids d'eau.

12. Procédé selon l'une quelconque des revendications 6 à 11, **caractérisé en ce que** les composés réactifs vis-à-vis d'isocyanates comportent au moins un polyesterpolyol dont les composants monomères contiennent de 1 à 20 % en moles d'une substance hydrophobe.

13. Procédé selon l'une quelconque des revendications 1 à 12, **caractérisé en ce que** pour la production des mousses rigides à base de polyisocyanurate on fait réagir le composant polyisocyanate a) et les composants b) à e) en quantités telles que l'indice d'isocyanate vaut de 180 à 700.

14. Utilisation du système catalyseur pour la production de mousses rigides à base de polyisocyanurate expansées à l'acide formique, dans laquelle le système catalyseur contient
i) au moins un composé de structure 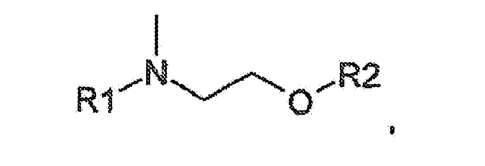 dans laquelle, R¹ représente CH₃,
CH₂-CH₂-N(CH₃)₂ ou CH₂-CH₂OH, et
R² représente H, CH₂-CH₂OH ou CH₂-CH₂N(CH₃)₂,
et
(ii) au moins un catalyseur de trimérisation, choisi parmi un sel d'ammonium, de métal alcalin ou alcalino-terreux d'un acide carboxylique.
